# EUROPEAN PATENT SPECIFICATION

(11) **EP 2 851 462 B1**
(45) Date of publication and mention of the grant of the patent: **16.11.2016**
(21) Application number: 14184571.9
(22) Date of filing: 12.09.2014
(51) Int. Cl.: D06F 37/00, F16C 33/72, F16C 35/06, F16C 35/067

(54) **Tubular bushing co-moldable with tubs of washing machines**
Mit Trommeln von Waschmaschinen verbundformbare Rohrbuchse
Traversée tubulaire co-moulable de cuves de machine à laver

(30) Priority: 13.09.2013 IT TO20130745
(43) Date of publication of application: 25.03.2015
(73) Proprietor: Aktiebolaget SKF, 415 50 Göteborg (SE)
(72) Inventor: Mola, Roberto, I-10129 Torino (IT); Restivo, Riccardo, I-10138 Torino (IT); Scaltriti, Gianpiero, I-10135 Torino (IT)
(74) Representative: Tedeschini, Luca

(56) References cited:
- WO-A1-2012/089472
- WO-A2-2007/126170
- DE-A1- 4 422 853
- DE-A1- 10 350 794

## Description

### Technical field

The present invention is related to a tubular bushing co-moldable with tubs of washing machines.

### Background art

In general, known co-moldable tubular bushings are co-molded in a bottom wall of the tub of washing machines, in order to support embossed drums of said washing machines and are passed through by a drum drive shaft. Said tubular bushings comprises two rolling bearings, located along a central axis of the bushing, to allow a rotation of the drive shaft with respect to the tub. The bushing also comprises a spacer, axially interposed between the two bearings, to make stiffer the bushing, and a sealing element, axially alongside the bearing, the one of the two bearings located on the drum side. Finally, the bushing comprises a containing sleeve, which is which is made of plastic, by means of co-molding around the two bearings and the spacer, and defining a housing for the sealing element, an example is disclosed in DE 44 22 853 A1.

The assembly position of the above described tubular bushings forces the related components to temperature and humidity gradients, which are remarkable (for example, in the tub temperature over 90°C are reachable) and also time dependent. Only as an example, such gradients can influence the good performance of the sealing element, which can be submitted to different working conditions at its opposite sides. Such different working conditions can deteriorate the sealing of the contacting lips on the drive shaft.

### Invention summary

Aim of the present invention is to realize a tubular bushing co-moldable with tubs of washing machines, the tubular bushing avoiding the above described inconveniences.

According to the present invention, a tubular bushing co-moldable with tubs of washing machines is realized, the tubular bushing having the characteristics as in the enclosed independent claim.

Further embodiments of the invention, preferred and/or particularly advantageous, are described according to the characteristics as in the enclosed dependent claims

### Brief description of the drawings

A preferred embodiment of the invention will be now described, in an exemplifying and not limitative way, by reference to the enclosed drawing, in which:
- Figure 1 is a perspective view, with some parts taken away for clarity, of a preferred embodiment of the tubular bushing according to the present invention; and
- Figure 2 is an axial section, of the tubular bushing of Fig. 1.

### Detailed description

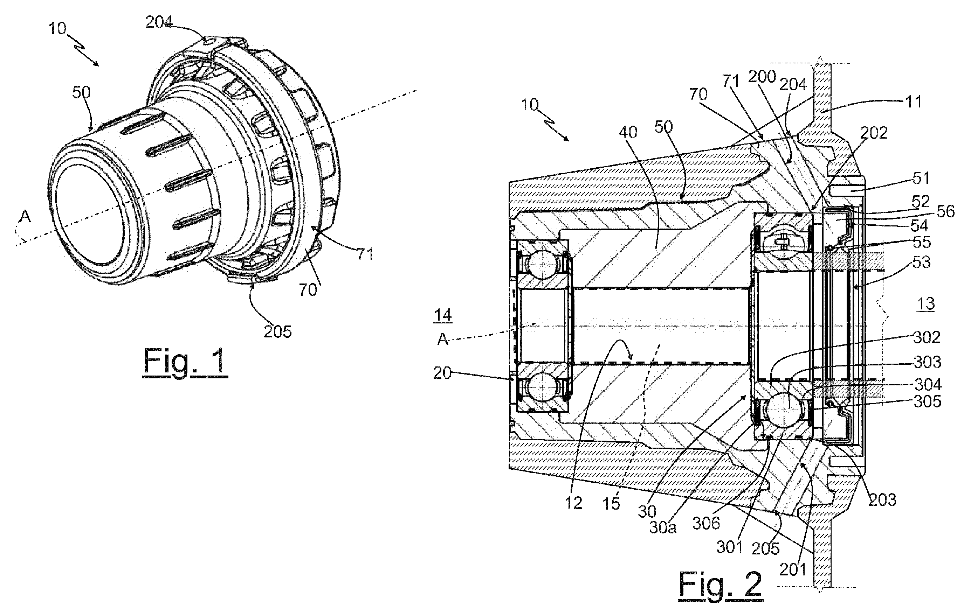

With reference to Figs. 1 and 2, with 10 is referenced as a whole a tubular bushing co-moldable with tubs of washing machines.

The tubular bushing 10 is co-moldable with a tub, schematized in Fig. 2 and referenced with 11, of a washing machine, to define a one-piece component with said tub 11, so as to reduce the washing machine production time.

The tubular bushing 10 has a central axis A and comprises:
- two rolling bearings 20 and 30, located along the axis A;
- a spacer 40 preferably made of plastic material or, for specific applications, metal material and axially interposed between the two bearings 20 and 30;
- a containing sleeve 50, which is preferably made of plastic material and is co-molded around the two bearings 20, 30 and the spacer 40; and
- a sealing element 53, which is located inside the sleeve 50, axially alongside the bearing 30.

Once co-molded with the tub 11, the tubular bushing 10 defines a communication duct 12 between a humid side 13, inside the tub 11, and a dry side 14, outside said tub 11, and is suitable to be internally and completely engaged by a drive shaft 15, in order to support a drum of the washing machine.

On one end, towards the humid side 13, the containing sleeve 50 comprises a cylindrical seat 30a, formed, during co-molding, by the bearing 30, and an annular edge 51, which extends coaxially to the axis A from the seat 30a towards the humid side 13 and internally defines a cylindrical housing 52, to accommodate the sealing element 53, so as to seal the inside of the duct 12 from the humid side 13. The housing 52 is located axially alongside and outside the seat 30a and has a diameter, whose dimension is greater than the dimension of the diameter of the seat 30a.

The bearing 30 comprises an outer ring 301 located axially close to the spacer 40, an inner ring 302 engaged and crossed by the drive shaft 15 and a plurality of rolling bodies 303, interposed between the rings 301 and 302, to allow the drive shaft 15 rotation with respect to the sleeve 50, in other words, to the tub 11. The rings 301 and 302 define, between them and for each side of the bearing 30, a cavity 304, which is sealed by a correspondent gasket 305.

The spacer 40 has a closed body structure, nevertheless, according to the use of the tubular bushing 10, the spacer 40 could also have a box-type structure.

The sealing element 53 comprises a shaped insert 54, assembled inside the housing 52, in a position axially exposed to the bearing 30 and, in the shown embodiment, two sealing lips 55, which radially extend towards the inside of the insert 54 and have a slide contact with the drive shaft 15 to seal the duct 12 with respect to the humid side 13.

The sealing element 53 and the bearing 30 confine and axially enclose an annular chamber 56, which is further closed in a radial direction by the drive shaft 15 and is completely sealed with respect to the external environment: in fact, if towards outside, in other words, towards the humid side 13, the chamber 56 is sealed both thanks to the sealing element 53 and the slide contact of the lips 55 on the drive shaft 15, towards inside, in other words, towards the duct 12, the chamber 56 is sealed thanks to the bearing 30 and its gaskets 305. In fact, the ring 302 of the bearing 30 is directly assembled on the drive shaft 15 and the ring 301 is located inside the seat 30a and is also provided with a pair of external grooves 306, which, while the sleeve 50 co-molding, are filled of the same material of the sleeve 50. The grooves 306, in addition to improve the sealing of the tubular bushing 10, avoiding liquid infiltration between the ring 301 and the seat 30a, also allow to lock the ring 301 inside the seat 30a: such a locking is for sure against the axial direction and, according to the grooves 306 shape, could also be against the rotation, above all in a case the grooves 306 were eccentric with respect to the axis A, in other words, had a variable depth around said axis A.

The containing sleeve 50, which, as mentioned, is co-molded around the bearings 20, 30 and the spacer 40, comprises a stiffening ring 70, which extends around the annular chamber 56, the bearing 30 and the sealing element 53. The stiffening ring 70, in addition to improve, together with the spacer 40, the stiffness of the tubular bushing 10 structure, above all on the tub 11 side where the said bushing 10 is mainly stressed, also presents a radially outer surface 71, which, whenever the tubular bushing 10 is co-molded with the tub 11, however remains free and exposed to the external environment, in other words is not drown inside the plastic material of the tub 11, as happen at the remaining parts of the tubular bushing 10.

The tubular bushing 10 further comprises two ducts 200 and 201, which directly extend through the containing sleeve 50 and having corresponding inner openings 202, 203 formed in the annular chamber 56 and corresponding outer openings 204, 205 formed through the surface 71, to fluid connect the annular chamber 56 with the external environment, eliminating whatever pressure and/or temperature gradient between the annular chamber 56 and the external environment. In fact, during working conditions, the almost high temperatures, which are reached at the humid side 13, can determine different temperature and pressure conditions at the opposite sides of the sealing element 53, causing in a worst case also a detachment of the lips 52 from the drive shaft 15, thus worsening the performance of the sealing element 53.

The two ducts 200, 201 are completely and internally obtained through the sleeve 50 and the corresponding openings 202, 203 are located over the seat 30a and the housing 52. In the described embodiment, the two ducts 200, 201 are arranged in diametrically opposite positions to each other and are substantially equal each other, having same dimensions and same inclination with respect to the axis A. In particular, the outer openings 204, 205 are axially offset towards the dry side 14 with respect to the associated inner openings 202, 203, so that the ducts 200, 201 are inclined with respect to the dry side 14.

The ducts 200, 201 work as supply duct and evacuation duct, thus allowing both the incoming of the air into the chamber 56 and the exiting of the air from said chamber 56. In other words, the ducts allow the chamber 56 to get an internal pressure substantially equal to the pressure of the external environment, thus eliminating whatever pressure gradient between the chamber 56 and said external environment. Therefore, the availability of two ducts 200, 201 is needed to contemporary allow the air evacuation and incoming inside the chamber 56, thus creating a continuous flow, which cannot be realized by using only one duct. Moreover, in the case some liquid coming from the washing machine were able to overcome the sealing of the lips 52 and penetrate the chamber 56, such a liquid would be drained outside through the duct 201, which, in the shown embodiment, is the lower one.

The inclination of the ducts 200, 201 allow to locate the openings 202, 203 as close as possible to the sealing element 53 and, at the same time, to locate the openings 204, 205 as far as possible from the annular edge 51, thus obtaining an axial space outside the sleeve 50, which is optimized for the co-molding with the tub 11.

Finally, the containing sleeve 50 comprises one or more antirotational teeth 61, each of them extends out of an external surface 62 of said sleeve 50, to avoid any rotation between the tubular bushing 10 and the tub 11. It is sufficient to have only one radial tooth 61, but, to create a symmetrical shape to the whole tubular bushing 10, preferably such teeth 61 are more than one and are reciprocally symmetric with respect to the axis A.

Other than the embodiments of the invention, as above disclosed, it is to be understood that a vast number of variations exist. It should also be appreciated that the exemplary embodiment or exemplary embodiments are only examples and are not intended to limit the scope, applicability, or configuration in any way. Rather, the foregoing summary and detailed description will provide those skilled in the art with a convenient road map for implementing at least one exemplary embodiment, it being understood that various changes may be made in the function and arrangement of elements described in an exemplary embodiment without departing from the scope as set forth in the appended claims and their legal equivalents.

## Claims

1. Tubular bushing (10) co-moldable with tubs (11) of washing machines, the tubular bushing (10) being passed through by a drive shaft (15) of the washing machine along a central axis (A) and comprising:
- two rolling bearings (20, 30) arranged along the axis (A);
- a spacer (40) arranged between the two bearings (20, 30);
- a sealing element (53) arranged axially alongside a first bearing (30) of the said two bearings (20, 30); and
- a containing sleeve (50) which is made by means of co-molding around the two bearings (20, 30) and the spacer (40) and defines a housing (52) for the sealing element (53); wherein
the sealing element (53) and the first bearing (30) bound and enclose axially an annular chamber which is further closed in the radial direction by the drive shaft (15), the tubular bushing (10) further comprising two ducts (200, 201) extending directly through the containing sleeve (50) and having respective inner openings (202, 203) formed in the annular chamber (56) for connecting the annular chamber (56) to the external environment, eliminating any pressure and/or temperature gradient between the annular chamber (56) and the external environment,
the tubular bushing **characterized in that** a first duct (200)(201) of the said two ducts (200, 201) is an air supply duct and a second duct (201)(200) of the said two ducts (200, 201) is an air evacuation duct.

2. Tubular bushing according to Claim 1, **characterized in that** the two ducts (200, 201) are arranged in diametrically opposite positions to each other.

3. Tubular bushing according to Claim 1 or 2, **characterized in that** the containing sleeve (50) comprises a stiffening ring (70) which extends around at least the annular chamber (56) and through which outer openings (204, 205) of the ducts (200, 201) are formed.

4. Tubular bushing according to Claim 3, **characterized in that** the outer openings (204, 205) of the ducts (200, 201) are axially offset with respect to the associated inner openings (202, 203) and the ducts (200, 201) are inclined with respect to the axis (A).

## Patentansprüche

1. Mit Trommeln (11) von Waschmaschinen verbundformbare Rohrbuchse (10), wobei die Rohrbuchse (10) von einer Antriebswelle (15) der Waschmaschine entlang einer zentralen Achse (A) passiert wird, umfassend:
- zwei Wälzlager (20, 30), die entlang der Achse (A) angeordnet sind;
- ein Distanzstück (40), das zwischen den zwei Lagern (20, 30) ist;
- ein Dichtungselement (53), das axial entlang eines ersten Lagers (30) der zwei Lager (20, 30) angeordnet ist; und
- eine Umfassungshülse (50), die durch Verbundformen um die zwei Lager (20, 30) und das Distanzstück (40) hergestellt ist und ein Gehäuse (52) für das Dichtungselement (53) definiert; wobei das Dichtungselement (53) und das erste Lager (30) gebunden sind und axial eine ringförmige Kammer umschließen, die ferner in radialer Richtung durch die Antriebswelle (15) geschlossen wird, wobei die Rohrbuchse (10) ferner zwei Rohrleitungen (200, 201) umfasst, die sich direkt durch die Umfassungshülse (50) erstrecken und zugehörige innere Öffnungen (202, 203) aufweisen, die in der ringförmigen Kammer 56) zum Verbinden der ringförmigen Kammer (56) mit der Außenumgebung ausgebildet sind, wodurch jeglicher Druck und/oder Temperaturgradient zwischen der ringförmigen Kammer (56) und der Außenumgebung beseitigt werden,
wobei die Rohrbuchse **dadurch gekennzeichnet ist, dass** eine erste Rohrleitung (200, 201) der zwei Rohrleitungen (200, 201) eine Luftversorgungsleitung und eine zweite Rohrleitung (201, 200) der zwei Rohrleitungen (200, 201) eine Luftentlüftungsrohrleitung ist.

2. Rohrbuchse nach Anspruch 1, **dadurch gekennzeichnet, dass** die zwei Rohrleitungen (200, 201) an diametrisch entgegengesetzten Positionen angeordnet sind.

3. Rohrbuchse nach Anspruch 1 oder 2, **dadurch gekennzeichnet, dass** die Umfassungshülse (50) einen Versteifungsring (70) aufweist, der sich mindestens um die ringförmige Kammer (56) erstreckt, durch welche die äußeren Öffnungen (204, 205) der Rohrleitungen ( 200, 201) gebildet werden.

4. Rohrbuchse nach Anspruch 3, **dadurch gekennzeichnet, dass** die äußeren Öffnungen (204, 205) der Rohrleitungen (200, 201) axial in Bezug auf die zugehörigen inneren Öffnungen (202, 203) versetzt sind und die Rohrleitungen (200, 201) in Bezug auf die Achse (A) geneigt sind.

## Revendications

1. Bague tubulaire (10) co-moulable avec des cuves (11) de lave-linge, la bague tubulaire (10) étant traversée par un arbre d'entraînement (15) du lave-linge le long d'un axe central (A) et comprenant .
- deux paliers à roulement (20, 30) disposés le long de l'axe (A) ;
- une entretoise (40) disposée entre les deux paliers (20, 30) ;
- un élément d'étanchéité (53) disposé axialement en position adjacente à un premier palier (30) parmi lesdits deux paliers (20, 30) ; et
- un manchon formant logement (50) qui est réalisé par co-moulage autour des deux paliers (20, 30) et de l'entretoise (40) et définit un logement (52) pour l'élément d'étanchéité (53) ; l'élément d'étanchéité (53) et le premier palier (30) délimitant et entourant axialement une chambre annulaire qui est en outre fermée dans la direction radiale par l'arbre d'entraînement (15), la bague tubulaire (10) comprenant en outre deux conduits (200, 201) s'étendant directement à travers le manchon formant logement (50) et comportant des ouvertures intérieures (202, 203) respectives formées dans la chambre annulaire (56) pour le raccordement de la chambre annulaire (56) à l'environnement extérieur, éliminant tout gradient de pression et/ou de température entre la chambre annulaire (56) et l'environnement extérieur,
la bague tubulaire étant **caractérisée en ce qu'**un premier conduit (200) (201) parmi lesdits deux conduits (200, 201) est un conduit d'alimentation en air et un second conduit (201) (200) parmi lesdits deux conduits (200, 201) est un conduit d'évacuation d'air.

2. Bague tubulaire selon la revendication 1, **caractérisée en ce que** les deux conduits (200, 201) sont placés dans des positions diamétralement opposées l'un par rapport à l'autre.

3. Bague tubulaire selon la revendication 1 ou 2, **caractérisée en ce que** le manchon formant logement (50) comprend un anneau de raidissement (70) qui s'étend autour d'au moins la chambre annulaire (56) et à travers lequel sont formées des ouvertures extérieures (204, 205) des conduits (200, 201).

4. Bague tubulaire selon la revendication 3, **caractérisée en ce que** les ouvertures extérieures (204, 205) des conduits (200, 201) sont décalées axialement par rapport aux ouvertures intérieures (202, 203) associées et les conduits (200, 201) sont inclinés par rapport à l'axe (A).
